# FASCICULE DE BREVET EUROPEEN

(11) **EP 2 264 297 B1**
(45) Date de publication et mention de la délivrance du brevet: **09.08.2017**
(21) Numéro de dépôt: 10005723.1
(22) Date de dépôt: 02.06.2010
(51) Int. Cl.: F02C 7/26, F02C 7/268, H02J 7/34

(54) **Dispositif et procédé pour le démarrage d'un moteur à turbine équipant un hélicoptère, mettant en oeuvre une source d'énergie électrique comprenant des organes d'appoint à décharge**
Einrichtung und Verfahren zum Starten einer Helikopter- Turbine mittels einer elektrischen Energiequelle mit zusätzlicher Entlade-Einheit
Device and method for starting of a helicopter turbine, using an electrical energy source comprising supplementary discharging means

(30) Priorité: 17.06.2009 FR 0902942
(43) Date de publication de la demande: 22.12.2010
(73) Titulaire: Airbus Helicopters, 13725 Marignane Cedex (FR)
(72) Inventeur: Gazzino, Marc, 13012 Marseille (FR); Lancelevee, Pierre-Bertrand, 26120 Malissard (FR)
(74) Mandataire: Pouillot, Laurent Pierre Paul

(56) Documents cités:
- FR-A1- 2 914 697
- US-A- 5 850 113
- US-A1- 2004 155 527
- US-A1- 2008 150 356
- US-A1- 2008 246 443
- US-B1- 6 321 707

## Description

La présente invention est du domaine de l'entraînement des rotors d'hélicoptère ou appareil volant analogue au moyen d'un moteur à turbine, et plus particulièrement des modalités de démarrage d'un tel moteur à turbine à partir d'une source d'énergie électrique. Elle a pour objet un dispositif et un procédé pour générer un tel démarrage.

Les hélicoptères ou appareils volants analogues sont équipés de rotors qui sont entraînés en rotation par des moteurs à turbine qui leur sont affectés. Ces moteurs à turbine comprennent dans leur généralité successivement un compresseur de gaz, une chambre de combustion d'un carburant et une turbine. Le compresseur génère de l'air sous pression qui est monté en température dans la chambre de combustion, pour entraîner la turbine en rotation. En cours de fonctionnement autonome du moteur à turbine, le compresseur est entraîné en rotation par la turbine. Les moteurs à turbines sont susceptibles d'être du type à turbine liée, selon lequel la turbine est liée en rotation au compresseur par un arbre de travail, ou du type à turbine libre, le compresseur et la turbine étant liés à des arbres respectifs. Se pose le problème de l'entraînement du moteur à turbine au démarrage, jusqu'à atteindre un seuil suffisant d'entraînement en rotation de la turbine pour permettre un fonctionnement autonome du moteur à turbine.

Il est connu d'équiper le moteur à turbine d'un moteur électrique annexe, ou démarreur, pour provoquer l'entraînement du compresseur jusqu'à parvenir audit seuil d'entraînement en rotation de la turbine. Le démarreur entraîne mécaniquement le compresseur jusqu'à ce qu'un seuil de compression adapté soit atteint pour pouvoir injecter du carburant et mettre en fonctionnement le circuit d'allumage du moteur à turbine. Le fonctionnement du démarreur est ensuite maintenu jusqu'à l'obtention d'une vitesse de rotation de la turbine suffisante pour permettre un fonctionnement autonome du moteur à turbine. Le démarreur est alimenté en énergie pendant la phase de démarrage par une source d'énergie électrique qui est embarquée ou qui est extérieure à l'hélicoptère. Pour ce qui est de la source d'énergie électrique embarquée, celle-ci est notamment constituée d'une batterie et/ou d'un générateur d'électricité embarqué, qui alimentent en énergie le démarreur pendant la phase de démarrage du moteur à turbine.

Une difficulté à surmonter réside dans la nécessité d'avoir à fournir une énergie suffisante au démarreur pour entraîner le compresseur à l'encontre d'un couple résistant opposé par la turbine. Le couple mécanique que procure le démarreur doit demeurer supérieur audit couple résistant pour obtenir une accélération suffisante de la vitesse d'entraînement du compresseur, jusqu'au fonctionnement autonome du moteur à turbine. Le couple résistant opposé par la turbine est particulièrement important au début du démarrage du moteur à turbine, en particulier préalablement à l'obtention dudit seuil de compression adapté à l'injection de carburant et d'allumage du moteur à turbine. Après l'injection de carburant et l'allumage du moteur à turbine, le démarreur et le moteur à turbine lui-même s'opposent ensemble au couple résistant pour fournir une force d'entraînement du compresseur qui augmente progressivement, jusqu'au fonctionnement autonome du moteur à turbine.

Le couple mécanique que le démarreur est apte à procurer pendant la phase de démarrage doit être adapté pour provoquer l'entraînement du compresseur jusqu'au fonctionnement autonome du moteur à turbine. L'exploitation des batteries embarquées pour alimenter le démarreur peut ne pas être satisfaisante, principalement dans le cas où elles sont utilisées à des températures qualifiées d'extrêmes ou si les batteries sont déchargées. Les batteries sont des sources d'énergie limitée pour une masse néanmoins importante. Les batteries sont aussi utilisées pour alimenter en énergie d'autres organes de l'hélicoptère, en étant exploitées tant au sol préalablement et au cours du démarrage des moteurs à turbine, que pendant le vol. Les batteries doivent répondre à des exigences de fonctionnement à basses températures, notamment en raison de leur affaiblissement et du fait que le couple résistant opposé par la turbine à l'encontre de la mise en rotation du compresseur est d'autant plus important à basses températures. Il est en conséquence nécessaire que les batteries embarquées offrent une réserve d'énergie confortable, avec pour inconvénient d'accroître leur masse, leur encombrement, augmentant ainsi la charge devant être embarquée sur l'hélicoptère.

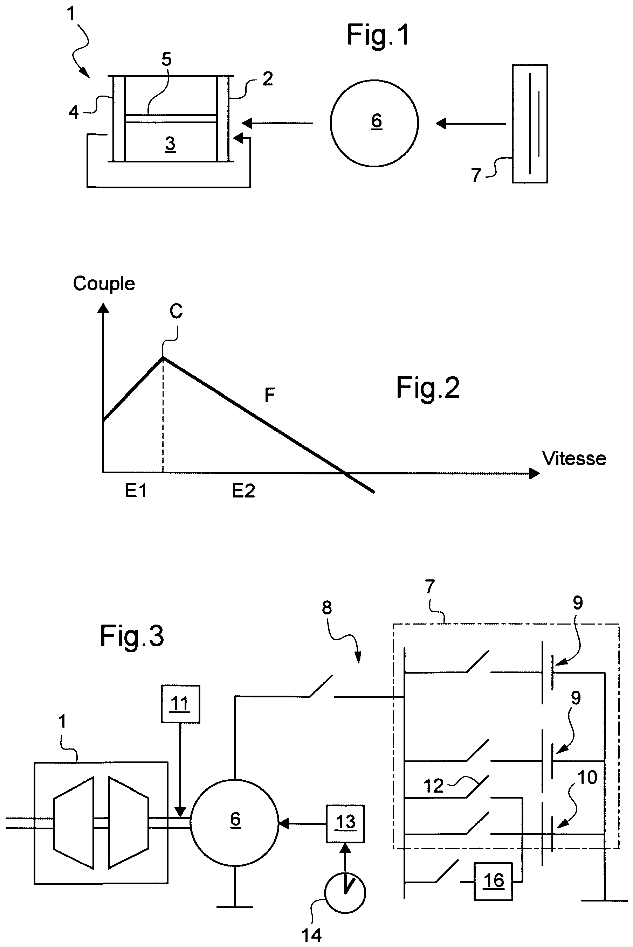

Citons le document US2008246443 (DOLJACK) qui décrit un dispositif pour améliorer une phase de fonctionnement génératrice d'un pic de consommation d'électricité soit d'un véhicule terrestre automobile (figure 1A), soit d'un appareil électronique portable (figures 1C-E). Ce dispositif prévoit, à demeure dans son circuit (100), un module (105) de super capacités en série (120) par rapport à un chargeur (110) ou un accumulateur (115). Pour un véhicule terrestre (100), la tension semble de 12V, pour les appareils portables de 5V (§0038). La tension du module (105) est indépendante de celle de l'accumulateur (115).

Le document US6321707 (DUNN) décrit un système à courant continu pour le démarrage de véhicules à moteur. La tension d'accumulateurs du véhicule est de 12V. Un dispositif auxiliaire de stockage d'énergie est installé de manière éventuellement amovible, dans le véhicule.

Le but de la présente invention est de proposer un dispositif et un procédé pour générer le démarrage d'un moteur à turbine équipant un hélicoptère jusqu'à son fonctionnement autonome. Il est plus particulièrement visé par la présente invention de proposer de tels procédé et dispositif qui procurent des solutions pour surmonter les problèmes et difficultés qui ont été énoncées et pour éviter les inconvénients qui en découlent. L'invention est définie par les revendications. La présente invention porte sur un dispositif selon la revendication 1. Selon une réalisation, le dispositif est organisé pour générer le démarrage d'au moins un moteur à turbine équipant un hélicoptère. Ce dispositif comprend un démarreur qui est affecté au moteur à turbine, tel que constitué d'un moteur électrique. Ce démarreur est alimenté en énergie électrique à partir d'un réseau électrique qui est notamment embarqué sur l'hélicoptère et qui inclue au moins une source d'énergie électrique comprenant au moins une batterie et/ou un organe générateur d'énergie électrique. Un tel organe générateur électrique est un organe de bord de l'hélicoptère, et est susceptible d'être constitué d'un organe de puissance générateur d'électricité ou de tout autre appareil analogue apte à générer de l'énergie électrique, tel qu'un générateur électromagnétique exploitant le frein du rotor de l'hélicoptère par exemple. Le réseau électrique est en outre susceptible d'être associé à un circuit de mise en oeuvre du démarreur, voire à des organes de mesure et de contrôle du fonctionnement de ce dernier.

Selon une caractéristique, un tel dispositif est principalement reconnaissable en ce que la source d'énergie électrique comprend en complément des organes à décharge qui sont aptes à procurer au démarreur un appoint ponctuel d'énergie électrique impulsionnelle de forte puissance. Les organes à décharge sont notamment des supercondensateurs connus en eux-mêmes, qui sont agencés pour fournir une densité de puissance et une densité d'énergie intermédiaires entre une batterie et des condensateurs électrolytiques classiques. Les supercondensateurs sont des composants électriques aptes à stocker une quantité d'énergie importante dans un volume restreint et aptes à restituer cette énergie sur une période courte, de l'ordre de quelques secondes.

L'apport des organes à décharge dans le réseau d'alimentation en énergie du démarreur permet de fournir à ce dernier la puissance nécessaire pour entraîner la turbine vers le seuil de mise en fonctionnement autonome du moteur à turbine. Plus particulièrement, la quantité d'énergie nécessaire pour le démarreur est variable selon l'évolution du démarrage du moteur à turbine, et notamment selon l'importance du couple résistant induit par la turbine, qui évolue. L'invention permet avantageusement de procurer à un instant donné une puissance importante de courte durée pour permettre au démarreur de s'opposer au couple résistant lorsque ce dernier est le plus important. Cet instant correspond notamment au passage à la phase d'allumage du moteur à turbine. L'exploitation de l'énergie fournie par les organes à décharge est avantageusement placée sous la dépendance de moyens de contrôle aptes à déterminer l'instant opportun d'une telle exploitation. De tels moyens de contrôle sont notamment associés à des moyens de mesure d'un ou de plusieurs paramètres significatifs de l'importance du couple résistant opposé par la turbine à l'encontre de l'entraînement du compresseur par le démarreur.

La réserve d'énergie qui est fournie par les batteries pour le démarrage du moteur à turbine peut être réduite, ce qui permet de restreindre la masse et l'encombrement des batteries embarquées.

La délivrance d'un courant impulsionnel alimentant le démarreur en énergie peut aussi être mise à profit en cas de démarrage dans des conditions climatiques difficiles, notamment en cas de basses températures. Ces basses températures sont néfastes pour un fonctionnement optimisé des batteries embarquées sur l'hélicoptère et/ou rendent l'entraînement du compresseur du moteur à turbine plus difficile à opérer en raison d'un accroissement du couple résistant induit par la turbine. L'exploitation des organes à décharge pour alimenter le démarreur en énergie permet de palier aux faiblesses des batteries et de procurer au démarreur l'énergie adaptée pour s'opposer au couple particulièrement résistant induit par la turbine à basses températures.

En cas de pertes d'avionnage et notamment de pertes en ressource électrique fournie par les batteries et/ou un générateur d'électricité embarqué, un apport d'énergie électrique réservé au démarrage du moteur à turbine est susceptible d'être nécessaire. Les organes à décharge, qui sont de préférence exclus de l'alimentation électrique des autres organes de bord de l'hélicoptère, sont susceptibles d'être exploités pour l'entraînement du compresseur du moteur à turbine en étant réservés à son démarrage. Les organes à décharge peuvent aussi être utilisés pour le filtrage du réseau de bord.

A titre indicatif, la capacité conjuguée des organes à décharge est apte à procurer un appoint d'énergie électrique d'une intensité de l'ordre de plusieurs centaines à plusieurs milliers d'ampères. Les organes à décharge sont avantageusement regroupés par pluralité en au moins un module. Les organes à décharge sont par exemple d'une tension unitaire de l'ordre de 2,7 Vdc en étant connectés les uns aux autres en série par module, et sont en nombre correspondant apte à être exploités sur un réseau électrique d'une tension comprise entre 24Vdc et 29Vdc. La capacité individuelle des organes à décharge est comprise entre plusieurs dizaines et plusieurs milliers de Farad. Plus particulièrement les organes à décharge sont regroupés par douzaine en au moins un module, chaque organe à décharge d'un module étant d'une capacité individuelle de l'ordre de 3000 F.

Plus précisément, selon un exemple significatif, préféré mais non limitatif de réalisation, les organes à décharge sont regroupés par pluralité en au moins un module. Les organes à décharge d'un module sont préférentiellement regroupés par douzaine, sont d'une capacité individuelle de l'ordre de 3000 F pour une tension unitaire de l'ordre de 2,7 Vdc et sont connectés en série conférant au module une aptitude d'exploitation sur un réseau de tension de l'ordre de 28 Vdc, notamment comprise entre 24Vdc et 29Vdc.

Selon une forme avantageuse de réalisation, les organes à décharge, et notamment au moins un module, forment au moins en partie un accessoire qui est monté de manière amovible sur le réseau. On comprendra par accessoire une faculté offerte d'installation ou non d'un groupe d'organes à décharge sur le réseau, sans affecter la continuité électrique du réseau nécessaire à son fonctionnement, notamment en cas de retrait d'un module. Un tel accessoire est susceptible d'être exploité optionnellement selon les besoins, en étant installé à bord de l'hélicoptère en cas de nécessité tel qu'en cas de basses températures. Lorsque l'accessoire n'est pas indispensable, il peut être retiré du réseau sans affecter son fonctionnement pour éviter d'embarquer à bord de l'hélicoptère une charge inutile.

Les organes à décharge sont montés sur le réseau indifféremment en série ou en parallèle par rapport à la batterie et/ou à l'organe générateur d'énergie électrique. Un montage en série présente cependant l'avantage d'autoriser une exploitation optimale des organes à décharge en cas de défaillance de la batterie.

L'activation des organes à décharge procurant ledit appoint d'énergie électrique est notamment placée sous la dépendance de moyens de mesure qui sont indifféremment du type chronométrique et/ou du type dynamique de détection de la vitesse d'entraînement d'un compresseur du moteur à turbine et/ou du type électrique de détection de la phase d'allumage du moteur à turbine, et/ou du type à détection des conditions climatiques. Ces exemples préférés d'agencement des moyens de mesure et/ou de contrôle ne sont pas limitatifs.

Plus particulièrement, l'activation des organes à décharge est placée sous la dépendance de différents moyens de contrôle de l'évolution de l'entraînement du compresseur au cours de la phase de démarrage du moteur à turbine. Ces moyens de contrôle sont susceptibles d'exploiter toute information relative à la mise en oeuvre du démarreur, à l'entraînement du compresseur et/ou au couple résistant opposé par la turbine, voire toute autre information significative des besoins en énergie du démarreur pour entraîner le compresseur pendant la phase de démarrage du moteur à turbine.

L'activation des organes à décharge procurant ledit appoint d'énergie électrique est avantageusement placée sous la dépendance d'un circuit de commande de la mise en oeuvre du démarreur. Cette activation est susceptible d'intervenir après un temps donné de mise en oeuvre du démarreur. A titre indicatif, la période entre la mise en oeuvre du démarreur et le déchargement des organes à décharge est de l'ordre de quelques secondes, telle que comprise entre 3 et 5 secondes et plus particulièrement de l'ordre de 4 secondes. On notera qu'il est opportun de prévoir un certain temps de charge des organes à décharge lorsque l'on souhaite les exploiter immédiatement après leur recharge. Dans ce cas, une période de l'ordre d'une centaine de secondes après la commande de mise en oeuvre du démarreur est réservée à ce rechargement. Il doit être compris que ces valeurs de temps sont données à titre indicatif et doivent être ajustées au cas d'espèce, tel que selon le type de moteur à turbine utilisé et selon la puissance du moteur à turbine utilisé.

L'activation des organes à décharge est aussi susceptible d'intervenir à partir d'une détection d'une stagnation de la vitesse d'entraînement du compresseur pendant la phase de démarrage du moteur à turbine. La puissance électrique fournie au compresseur est alors susceptible d'être ajustée en intensité et en durée en fonction des paramètres mesurés en temps réels relatifs à l'entraînement du compresseur. De telles dispositions permettent de restreindre au strict nécessaire l'apport en énergie impulsionnelle que fournissent les organes à décharge.

De préférence, l'activation des organes à décharge procurant ledit appoint d'énergie électrique est en outre placée sous la dépendance d'un organe de commande manuelle. Ces dispositions visent le cas échéant à laisser au pilote de l'hélicoptère le choix de l'instant où il est opportun d'exploiter les organes à décharge. Un tel choix peut être laissé sélectivement au pilote en cas de pertes d'avionnage par exemple, et/ou en cas d'une altération ou d'une défaillance des ressources électriques de l'hélicoptère.

Les organes à décharge sont notamment montés sur le réseau en étant aptes à être rechargés en énergie à partir de la batterie et/ou à partir de l'organe générateur d'énergie électrique et/ou à partir d'un appareil extérieur au réseau de délivrance d'énergie électrique.

D'une manière générale, le rechargement des organes à décharge est susceptible d'être obtenu à partir d'une quelconque source d'énergie, que ce soit une source embarquée ou une source extérieure. Plus particulièrement, les ressources d'énergie embarquées à bord de l'hélicoptère peuvent être mises à profit. Une source d'énergie extérieure à l'hélicoptère peut aussi être exploitée, telle qu'une alimentation électrique à partir d'un réseau au sol ou à partir d'une source autonome d'énergie déplaçable. On notera que le rechargement en énergie des organes à décharge est préférentiellement extemporané à leur exploitation, ou en d'autres termes réalisé peu de temps avant leur exploitation.

De préférence, le réseau inclut un convertisseur DC/DC de régulation du courant délivré par les organes à décharge et/ou du courant exploité pour les recharger. Notamment, le convertisseur permet de réguler le courant et la tension pour préserver les organes à décharge de surtensions, afin d'obtenir un rechargement rapide et optimisé des organes à décharge à partir d'un courant et d'une tension constants. Le convertisseur permet aussi de contrôler le flux d'électricité de charge pour éviter de perturber la tension du réseau électrique de bord de l'hélicoptère en vol. Le convertisseur permet encore de contrôler le flux d'électricité nécessaire au démarrage en fonction du temps de démarrage souhaité, afin de délivrer la juste quantité de puissance nécessaire.

La présente invention porte aussi sur un procédé selon la revendication 8 pour générer le démarrage d'un moteur à turbine équipant un hélicoptère, mettant en oeuvre un dispositif tel qu'il vient d'être décrit. Selon une caractéristique, ce procédé consiste à alimenter en énergie le démarreur en délivrant un courant impulsionnel de forte puissance au moyen des organes à décharge, constitués de supercondensateurs notamment, en appoint d'une délivrance d'un courant modéré au moyen de la batterie et/ou de l'organe générateur de courant.

La délivrance du courant impulsionnel est par exemple réalisée, isolément ou en combinaison, à partir de diverses opérations de contrôle et de commande :
*) à un instant T déterminé à partir de la mise en marche du démarreur,
*) à partir d'un seuil S déterminé de vitesse et/ou d'évolution de cette vitesse d'entraînement du compresseur du moteur à turbine, et notamment à partir d'une détection d'une stagnation de la vitesse d'entraînement du compresseur,
*) à partir d'une détection D de la phase d'allumage du moteur à turbine,
*) à partir d'une commande manuelle.

Un rechargement extemporané des organes à décharge est effectué indifféremment à partir d'une source d'énergie embarquée sur l'hélicoptère et/ou à partir d'une source extérieure au réseau.

Le réseau d'alimentation en énergie du démarreur est notamment muni d'une source d'appoint optionnelle qui est amovible sans affecter le fonctionnement du réseau, et qui est formée d'au moins un module regroupant une pluralité desdits organes à décharge.

La présente invention sera mieux comprise à la lecture de la description qui va en être faite d'exemples de réalisation, en relation avec les figures des planches annexées, dans lesquelles :
- la fig.1 est un schéma illustrant le principe des modalités de démarrage d'un moteur à turbine,
- la fig.2 est un graphique illustrant l'évolution, en fonction de la vitesse d'entraînement, du couple résistant opposé par le moteur à turbine en phase de démarrage,
- la fig.3 est un schéma de principe d'un dispositif de la présente invention,
- la fig.4 est un schéma électronique selon un exemple de réalisation d'un dispositif de la présente invention, et
- la fig.5 est un schéma illustrant un exemple de réalisation d'un module d'organes à décharge que comprend un dispositif de la présente invention.

Sur la fig.1, un moteur à turbine 1 comprend un compresseur à gaz 2 destiné à augmenter la pression de l'air contenu dans une chambre de combustion 3. La mise en pression de l'air est réalisée par centrifugation. L'air sous pression est échauffé dans la chambre de combustion 3 après allumage du moteur à turbine 1, pour induire sa dilatation et entraîner une turbine 4 en rotation. Cette turbine 4 est liée en mobilité au compresseur 2 par un arbre de travail 5, de sorte que sa mise en rotation entraîne à son tour le compresseur 2. Pour simplifier la description de la présente invention, celle-ci est appliquée sur l'exemple de réalisation illustré sur la fig.1 à un moteur à turbine du type à turbine liée. Cependant, il doit être compris que cette application n'est pas restrictive, et que la présente invention est notamment préférentiellement applicable à un moteur à turbine du type à turbine libre et/ou du type à turbocompresseur. Il est nécessaire dans une phase de démarrage d'entraîner le compresseur 2 par un organe annexe, jusqu'à l'obtention d'un fonctionnement autonome du moteur à turbine 1. Cet organe annexe est constitué d'un démarreur 6, tel qu'un moteur électrique, qui est alimenté en électricité par une source d'énergie électrique 7. Dans le cas d'application du moteur à turbine 1 à l'entraînement d'un rotor d'un hélicoptère, cette source d'énergie électrique 7 est notamment une source au sol ou une source embarquée, telle que des batteries ou un générateur d'électricité par exemple.

Sur la fig.2, un graphique illustre l'évolution F d'un couple résistant en fonction de la vitesse d'entraînement du compresseur lors de la phase de démarrage. Ce couple résistant est notamment exercé par la turbine 4 à l'encontre de l'entraînement en rotation du compresseur 2 par le démarreur 6. Globalement, la phase de démarrage du moteur à turbine est subdivisée en deux étapes. Au cours d'une première étape E1, le démarreur 6 entraîne mécaniquement le compresseur 2 jusqu'à ce que soit atteint un seuil de compression adapté pour l'injection du carburant dans la chambre de combustion 3 et la mise en fonctionnement du circuit d'allumage du moteur à turbine 1. Le fonctionnement du démarreur 6 est ensuite maintenu pendant une deuxième étape E2 jusqu'à l'obtention d'une vitesse de rotation de la turbine 4 suffisante pour permettre un fonctionnement autonome du moteur à turbine 1. Le couple résistant optimal C à l'encontre d'un entraînement du compresseur 2 par le démarreur 6 est exercé à l'issue de la première étape, lorsque ledit seuil de compression est proche d'être atteint. La turbine 4 oppose un couple résistant à l'encontre de l'entraînement du compresseur 2 qui est optimal à l'instant où le moteur à turbine 4 commence à être en mode de fonctionnement autonome, et que la turbine 1 commence à être entraînée par les gaz chauds sous pression.

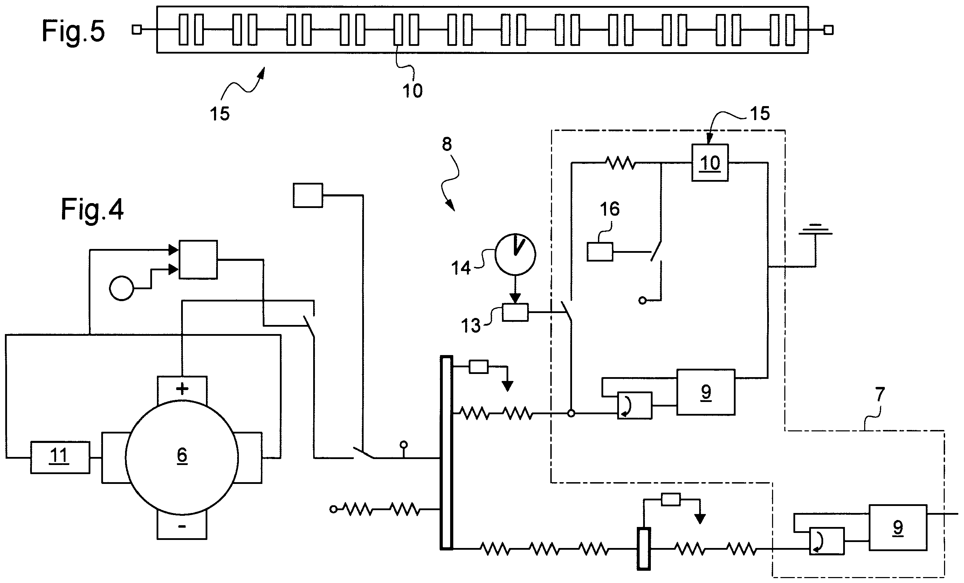

Sur les fig.3 et fig.4, le démarreur 6 est en relation avec un réseau 8 pour son alimentation électrique. Ce réseau 8 comprend la source d'énergie électrique 7, incluant des batteries 9 sur l'exemple de réalisation illustré. L'invention propose lors de la phase de démarrage du moteur à turbine 1, d'apporter un appoint ponctuel d'énergie électrique impulsionnelle de forte puissance au démarreur 6. Cet apport est réalisé au moyen d'organes à décharge 10, supercondensateurs notamment, qui sont intégrés au réseau d'alimentation électrique du démarreur 6. Cet apport ponctuel d'énergie est réalisé lorsque le couple résistant à l'encontre de l'entraînement du compresseur 2 est optimal, pour apporter au démarreur 6 une forte puissance lui permettant de s'opposer à ce couple résistant optimal en préservant les batteries 9 de leur épuisement. Ces dispositions permettent de restreindre la quantité d'énergie que doivent fournir les batteries 9, et donc de limiter leur masse et leur encombrement, et en conséquence de limiter la charge devant être embarquée à bord de l'hélicoptère. Par ailleurs, en cas de difficultés d'avionnage résultant d'une altération ou d'une dégradation des batteries ou de l'organe de bord générateur d'électricité, les organes à décharge 10 peuvent être exploités pour permettre un démarrage du moteur à turbine 1.

Sur l'exemple de réalisation illustré, les organes à décharge 10 sont préférentiellement montés en parallèle par rapport aux batteries 9. Leur exploitation est rendue possible, y compris dans le cas où l'une au moins des batteries 9 est détériorée. Cependant, une telle solution préférée n'exclue pas la possibilité de monter les organes à décharge 10 en série avec les batteries 9.

L'activation des organes à décharge 10 est placée sous la dépendance de moyens 11 de mesure et de contrôle. Sur l'exemple de réalisation illustré, ces moyens 11 de mesure et de contrôle sont constitués par des moyens du type dynamique, aptes à mesurer et à contrôler la vitesse d'entraînement du compresseur. Lorsque la vitesse d'entraînement du compresseur est détectée sensiblement stagnante, c'est-à-dire en cas d'une décroissance de l'accélération d'entraînement du compresseur 2, les organes à décharge 10 sont exploités pour accroître la puissance fournie par le démarreur 6. De préférence, un organe à commande manuelle 12 permet aussi de décharger les organes à décharge 10 selon la volonté du pilote. L'activation des organes à décharge 10 est aussi susceptible d'être placée sous la dépendance d'un circuit de commande 13 de la mise en oeuvre du démarreur 6, associé à des moyens chronométriques 14. De telles dispositions permettent d'activer les organes à décharge 10 après une durée prédéterminée suivant la mise en oeuvre du démarreur 6. Cette durée correspond à une période de consigne séparant la mise en oeuvre du démarreur et la génération du couple résistant optimal. Une telle période de consigne est susceptible d'être considérée constante pour un démarreur et un moteur à turbine donnés, et est susceptible d'être pondérée en fonction de la température ambiante mesurée.

Le rechargement des organes à décharge 10 est réalisé au moyen des batteries 9, par l'intermédiaire d'un convertisseur DC/DC 16. Un tel convertisseur est apte à réguler le courant exploité pour recharger les organes à décharge 10, ou délivré par ces derniers.

Sur la fig.5, un module 15 amovible est organisé pour constituer un accessoire apte à être sélectivement implanté sur un réseau 8 d'alimentation électrique d'un démarreur 6 exploité pour le démarrage d'un moteur à turbine1. Ce module 15 est destiné à être exploité lorsque les conditions climatiques sont défavorables pour une utilisation fiable des batteries 9, tel qu'en cas de basses températures. Un tel module 15 peut être installé optionnellement sur le réseau 8, pour éviter d'embarquer à bord de l'hélicoptère une charge supplémentaire. Ce module 15 est par exemple constitué d'une douzaine d'organes à décharge 10 qui sont montés en série, et qui sont d'une tension unitaire de l'ordre de 2,7 Vdc pour une capacité de l'ordre de 3000 F.

## Revendications

1. Dispositif pour générer le démarrage d'au moins un moteur à turbine (1) équipant un hélicoptère, ce dispositif comprenant un démarreur (6) et un réseau électrique (8), le démarreur (6) étant alimenté en énergie électrique à partir du réseau électrique (8) incluant au moins une source d'énergie électrique avec au moins une batterie (9) et/ou un organe générateur d'énergie électrique ; la source d'énergie électrique comprenant en complément, des organes à décharge (10) aptes à procurer au démarreur (6) un appoint ponctuel d'énergie électrique impulsionnelle de forte puissance ; ces organes à décharge (10) étant regroupés par pluralité en au moins un module (15) ;
les organes à décharge (10) formant au moins en partie un accessoire à monter de manière amovible sur le réseau (8) à bord de l'hélicoptère;
le dispositif étant configuré de manière à ce que le démarreur (6), au cours d'une première étape de la phase de démarrage du moteur à turbine (1), entraîne mécaniquement un compresseur (2) du moteur (1) jusqu'à ce que soit atteint un seuil de compression adapté pour l'injection du carburant dans une chambre de combustion (3) du moteur (1) ; et le fonctionnement du démarreur (6), au cours d'une deuxième étape de la phase de démarrage, est maintenu jusqu'à l'obtention d'une vitesse de rotation d'une turbine (4) du moteur (1) suffisante pour permettre un fonctionnement autonome du moteur (1) ; un couple résistant optimal à l'encontre de l'entraînement du compresseur (2) par le démarreur (6) étant exercé à l'issue de la première étape ; **caractérisé en ce que** le dispositif est configuré de manière à ce que ledit appoint ponctuel est réalisé lorsque ledit couple résistant à l'encontre de l'entraînement du compresseur (2) est optimal.

2. Dispositif selon la revendication 1,
**caractérisé en ce que** les organes à décharge (10) sont montés sur le réseau (8) indifféremment en série ou en parallèle par rapport à la batterie (9) et/ou à l'organe générateur d'énergie électrique.

3. Dispositif selon l'une quelconque des revendications 1 à 2, **caractérisé en ce que** l'activation des organes à décharge (10) procurant ledit appoint d'énergie électrique est placée sous la dépendance de moyens de mesure (11,14) qui sont indifféremment du type chronométrique (14) et/ou du type dynamique (11) de détection de la vitesse d'entraînement d'un compresseur (2) du moteur à turbine (1) et/ou du type électrique de détection de la phase d'allumage du moteur à turbine (1), et/ou du type à détection des conditions climatiques.

4. Dispositif selon l'une quelconque des revendications 1 à 3, **caractérisé en ce que** l'activation des organes à décharge (10) procurant ledit appoint d'énergie électrique est placée sous la dépendance d'un circuit de commande (13) de la mise en oeuvre du démarreur (6).

5. Dispositif selon l'une quelconque des revendications 1 à 4, **caractérisé en ce que** l'activation des organes à décharge (10) procurant ledit appoint d'énergie électrique est placée sous la dépendance d'un organe de commande manuelle (12).

6. Dispositif selon l'une quelconque des revendications 1 à 5, **caractérisé en ce que** les organes à décharge (10) sont montés sur le réseau (8) en étant aptes à être rechargés en énergie à partir de la batterie (9) et/ou à partir de l'organe générateur d'énergie électrique et/ou à partir d'un appareil extérieur au réseau (8) de délivrance d'énergie électrique.

7. Dispositif selon la revendication 6,
**caractérisé en ce que** le réseau (8) inclue un convertisseur DC/DC (16) de régulation du courant délivré par les organes à décharge (10) et/ou du courant exploité pour les recharger.

8. Procédé pour générer le démarrage d'un moteur à turbine (1) équipant un hélicoptère, mettant en oeuvre un dispositif selon l'une quelconque des revendications 1 à 7, le procédé consistant en ce que le démarreur (6), au cours d'une première étape de la phase de démarrage du moteur à turbine (1), entraîne mécaniquement un compresseur (2) du moteur (1) jusqu'à ce que soit atteint un seuil de compression adapté pour l'injection du carburant dans une chambre de combustion (3) du moteur (1) ; et en ce que le fonctionnement du démarreur (6), au cours d'une deuxième étape de la phase de démarrage, est maintenu jusqu'à l'obtention d'une vitesse de rotation d'une turbine (4) du moteur (1) suffisante pour permettre un fonctionnement autonome du moteur (1) ; un couple résistant optimal à l'encontre de l'entraînement du compresseur (2) par le démarreur (6) étant exercé à l'issue de la première étape ; **caractérisé en ce qu'**il que le procédé consiste à alimenter en énergie le démarreur (6) en délivrant un courant impulsionnel de forte puissance au moyen des organes à décharge (10) lorsque ledit couple résistant à l'encontre de l'entraînement du compresseur (2) est optimal, en appoint d'une délivrance d'un courant modéré au moyen de la batterie (9) et/ou de l'organe générateur de courant.

9. Procédé selon la revendication 8,
**caractérisé en ce que** la délivrance du courant impulsionnel est réalisée à un instant T déterminé à partir de la mise en marche du démarreur (6), et/ou à partir d'un seuil S déterminé de vitesse et/ou d'évolution de cette vitesse d'entraînement du compresseur (2) du moteur à turbine (1), et/ou à partir d'une détection D de la phase d'allumage du moteur à turbine (1), et/ou à partir d'une commande manuelle.

10. Procédé selon l'une quelconque des revendications 8 ou 9, **caractérisé en ce qu'**il consiste à effectuer un rechargement extemporané des organes à décharge (10) indifféremment à partir d'une source d'énergie embarquée (9) sur l'hélicoptère et/ou à partir d'une source extérieure au réseau (8).

11. Procédé selon l'une quelconque des revendications 8 ou 9, **caractérisé en ce qu'**il consiste à munir le réseau (8) d'alimentation en énergie du démarreur (6) d'une source d'appoint optionnelle qui est amovible sans affecter le fonctionnement du réseau (8) et qui est formée d'au moins un module (15) regroupant une pluralité d'organes à décharge (10).

## Patentansprüche

1. Vorrichtung zum Starten mindestens eines Turbinenmotors (1), mit dem ein Hubschrauber ausgerüstet ist, wobei die Vorrichtung einen Starter (6) und ein elektrisches Netz (8) aufweist, wobei der Starter (6) ausgehend von dem elektrischen Netz (8), welches mindestens eine Quelle elektrischer Energie mit mindestens einer Batterie (9) und/oder einer Einheit zur Erzeugung elektrischer Energie aufweist, mit elektrischer Energie gespeist wird, wobei die Quelle elektrischer Energie zusätzlich Entladungseinheiten (10) aufweist, die den Starter (6) mit einer punktuellen Unterstützung an pulsförmiger elektrischer Energie hoher Leistung versorgen können, wobei diese Entladungseinheiten (10) in Mehrzahl in mindestens einem Modul (15) zusammengeschlossen sind, wobei die Entladungseinheiten (10) zumindest zum Teil ein abnehmbar in dem Netz (8) an Bord des Hubschraubers zu montierendes Zusatzgerät bilden, wobei die Vorrichtung so ausgebildet ist, dass der Starter (6) während eines ersten Schritts der Startphase des Turbinenmotors (1) einen Kompressor (2) des Motors (1) mechanisch antreibt, bis ein Kompressionsschwellenwert erreicht ist, der angepasst ist für die Einspritzung von Kraftstoff in eine Verbrennungskammer (3) des Motors (1), und wobei der Betrieb des Starters (6) während eines zweiten Schrittes der Startphase beibehalten wird bis zum Erreichen einer Drehgeschwindigkeit einer Turbine (4) des Motors (1), die ausreicht, um einen selbständigen Betrieb des Motors (1) zu ermöglichen, wobei ein optimales Lastmoment gegen den Antrieb des Kompressors (2) durch den Starter (6) am Ende des ersten Schrittes ausgeübt wird,
**dadurch gekennzeichnet, dass** die Vorrichtung so ausgebildet ist,
dass diese punktuelle Unterstützung ausgeführt wird, wenn das Lastmoment gegen den Antrieb des Kompressors (2) optimal ist.

2. Vorrichtung nach Anspruch 1,
**dadurch gekennzeichnet, dass** die Entladungseinheiten (10) in dem Netz (8) gleichermaßen in Reihe oder parallel zu der Batterie (9) und/oder der Einheit zur Erzeugung elektrischer Energie geschaltet sind.

3. Vorrichtung nach einem der Ansprüche 1 bis 2,
**dadurch gekennzeichnet, dass** die Aktivierung der Entladungseinheiten (10), die die Unterstützung durch elektrische Energie liefern, abhängig von Messelementen (11, 14) ist, die gleichermaßen vom chronometrischen Typ (14) und/oder vom dynamischen Typ (11) der Erfassung der Antriebsgeschwindigkeit eines Kompressors (2) des Turbinenmotors (1) sind und/oder vom elektrischen Typ der Erfassung der Zündphase des Turbinenmotors (1) und/oder vom Typ der Erfassung von klimatischen Bedingungen.

4. Vorrichtung nach einem der Ansprüche 1 bis 3,
**dadurch gekennzeichnet, dass** die Aktivierung der Entladungseinheiten (10), die die Unterstützung durch elektrische Energie liefern, abhängig von einem Steuerschaltkreis (13) des Betriebs des Starters (6) ist.

5. Vorrichtung nach einem der Ansprüche 1 bis 4,
**dadurch gekennzeichnet, dass** die Aktivierung der Entladungseinheiten (10), die die Unterstützung durch elektrische Energie liefern, abhängig von einem manuellen Steuerelement (12) ist.

6. Vorrichtung nach einem der Ansprüche 1 bis 5,
**dadurch gekennzeichnet, dass** die Entladungseinheiten (10) so in dem Netz (8) eingebaut sind, dass sie ausgehend von der Batterie (9) und/oder ausgehend von der Einheit zur Erzeugung elektrischer Energie und/oder ausgehend von einem Gerät außerhalb des Netzes (8) zur Lieferung elektrischer Energie aufgeladen werden können.

7. Vorrichtung nach Anspruch 6,
**dadurch gekennzeichnet, dass** das Netz (8) einen DC/DC-Wandler (16) aufweist zur Regelung des von den Entladungseinheiten (10) gelieferten Stroms und/oder des Stroms, der genutzt wird, um diese aufzuladen.

8. Verfahren zum Starten eines Turbinenmotors (1), mit dem ein Hubschrauber ausgerüstet ist, welches eine Vorrichtung nach einem der Ansprüche 1 bis 7 einsetzt, wobei das Verfahren darin besteht, dass der Starter (6) während eines ersten Schrittes der Startphase des Turbinenmotors (1) einen Kompressor (2) des Motors (1) mechanisch antreibt, bis dieser einen Kompressionsschwellenwert erreicht hat, der für die Einspritzung von Kraftstoff in eine Verbrennungskammer (3) des Motors (1) angepasst ist, und dass der Betrieb des Starters (6) während eines zweiten Schrittes der Startphase beibehalten wird, bis zum Erreichen einer Drehgeschwindigkeit der Turbine (4) des Motors (1), die ausreicht, um einen selbständigen Betrieb des Motors (1) zu ermöglichen, wobei ein optimales Lastmoment gegen den Antrieb des Kompressors (2) durch den Starter (6) am Ende des ersten Schrittes gebildet wird, **dadurch gekennzeichnet, dass** das Verfahren darin besteht, den Starter (6) mit Energie zu speisen, indem ein Stromimpuls hoher Leistung mittels der Entladungseinheiten (10) geliefert wird, wenn das Lastmoment gegen den Antrieb des Kompressors (2) optimal ist in Unterstützung einer Lieferung eines geringen Stroms durch die Batterie (9) und/oder die Stromerzeugungseinheit.

9. Verfahren nach Anspruch 8,
**dadurch gekennzeichnet, dass** die Lieferung des Stromimpulses in einem Moment T erfolgt, der ausgehend von dem Start des Starters (6) und/oder ausgehend von einem bestimmten Geschwindigkeitsschwellenwert und/oder dem Verlauf dieser Antriebsgeschwindigkeit des Kompressors (2) des Turbinenmotors (1) und/oder ausgehend von einer Erfassung D der Zündphase des Turbinenmotors (1) und/oder ausgehend von einer manuellen Steuerung bestimmt wird.

10. Verfahren nach einem der Ansprüche 8 oder 9,
**dadurch gekennzeichnet, dass** es daraus besteht, ein bedarfsmäßiges Wiederaufladen der Entladungseinheiten gleichermaßen ausgehend von einer in dem Hubschrauber eingebauten Energiequelle (9) und/oder von einer Quelle außerhalb des Netzes (8) durchzuführen.

11. Verfahren nach einem der Ansprüche 8 oder 9,
**dadurch gekennzeichnet, dass** es daraus besteht, den Energieversorgungskreis (8) des Starters (6) mit einer optionalen Unterstützungsquelle zu versehen, die abnehmbar ist, ohne den Betrieb des Netzes (8) zu beeinträchtigen, und die aus mindestens einem Modul (15) besteht, das eine Mehrzahl von Entladungseinheiten (10) zusammenschaltet.

## Claims

1. Device for generating the starting of at least one turbine engine (1) fitted to a helicopter, the device comprising a starter (6) and an electrical network (8), the starter (6) being supplied with electrical energy from the electrical network (8) including at least one source of electrical energy with at least one battery (9) and/or an electrical energy generator member; the source of electrical energy further comprising discharge members (10) suitable for providing the starter (6) with a short-term electrical energy boost in the form of a high-power pulse; these discharge members (10) being grouped together plurally in at least one module (15);
the discharge members (10) forming at least in part an accessory for mounting in removable manner in the network (8) on board the helicopter;
the device being configured in such a way that during a first stage of the starting phase of the turbine engine (1), the starter (6) drives a compressor (2) of the engine (1) mechanically until it reaches a compression threshold suitable for injecting the fuel into a combustion chamber (3) of the engine (1); and the operation of the starter (6) is then maintained during a second stage of the starting phase until a turbine (4) of the engine (1) has reached a speed of rotation sufficient to enable the engine (1) to operate on its own; an optimum opposing torque against the driving of the compressor (2) by the starter (6) being exerted at the end of the first stage; **characterised in that** the device is configured in such a way that said short-term boost is carried out when said torque against the driving of the compressor (2) is at its optimum.

2. Device according to claim 1,
**characterised in that** the discharge members (10) are mounted in the network (8) equally well in series or in parallel relative to the battery (9) and/or the electrical energy generator member.

3. Device according to any one of claims 1 to 2,
**characterised in that** the activation of the discharge members (10) providing said electrical energy boost is placed under the dependence of measurement means (11,14) which are equally well of the chronometric type (14) and/or of the dynamic type (11) for detecting the drive speed of a compressor (2) of the turbine engine (1) and/or of the electrical type for detecting the ignition phase of the turbine engine (1), and/or of the type for detecting climatic conditions.

4. Device according to any one of claims 1 to 3,
**characterised in that** the activation of the discharge members (10) providing said electrical energy boost is placed under the dependence of a control circuit (13) for operating the starter (6).

5. Device according to any one of claims 1 to 4,
**characterised in that** the activation of the discharge members (10) providing said electrical energy boost is placed under the dependence of a manual control member (12).

6. Device according to any one of claims 1 to 5,
**characterised in that** the discharge members (10) are mounted in the network (8), being suitable for being recharged with energy from the battery (9) and/or from the electrical energy generator member and/or from equipment external to the network (8) for delivering electrical energy.

7. Device according to claim 6,
**characterised in that** the network (8) includes a DC/DC converter (16) for regulating the current delivered by the discharge members (10) and/or the current used for recharging them.

8. Method for generating the starting of a turbine engine (1) fitted to a helicopter, making use of a device according to any one of claims 1 to 7,
the method consisting in that during a first stage of the starting phase of the turbine engine (1), the starter (6) drives a compressor (2) of the engine (1) mechanically until it reaches a compression threshold suitable for injecting the fuel into a combustion chamber (3) of the engine (1); and in that the operation of the starter (6) is then maintained during a second stage of the starting phase until a turbine (4) of the engine (1) has reached a speed of rotation sufficient to enable the engine (1) to operate on its own; an optimum opposing torque against the driving of the compressor (2) by the starter (6) being exerted at the end of the first stage; **characterised in that** the method consists in feeding energy to the starter (6) by delivering a high-power current pulse by means of the discharge members (10) when said torque against the driving of the compressor (2) is at its optimum, to boost moderate current delivery by means of the battery (9) and/or the current generator member.

9. Method according to claim 8,
**characterised in that** the delivery of the current pulse is carried out at an instant T determined from the starting of the starter (6), and/or from a determined threshold S for the speed and/or the speed variation with which the compressor (2) of the turbine engine (1) is driven, and/or from a detection D of the ignition phase of the turbine engine (1), and/or from a manual control.

10. Method according to any one of claims 8 or 9,
**characterised in that** it consists in extemporaneously recharging the discharge members (10) equally well from an energy source on board (9) the helicopter and/or from a source external to the network (8).

11. Method according to any one of claims 8 or 9,
**characterised in that** it consists in providing the energy supply network (8) of the starter (6) with an optional booster source which is removable without affecting the operation of the network (8) and which is formed by at least one module (15) grouping together a plurality of discharge members (10).
